# FASCICULE DE BREVET EUROPEEN

(11) **EP 1 583 815 B1**
(45) Date de publication et mention de la délivrance du brevet: **05.07.2006**
(21) Numéro de dépôt: 04701620.9
(22) Date de dépôt: 13.01.2004
(51) Int. Cl.: C11D 7/50, C09K 5/04, B08B 3/08, H05K 3/26, C11D 7/34, C11D 7/28, C11D 7/26

(54) **COMPOSITIONS CONTENANT DES HYDROCARBURES FLUORES ET DES SOLVANTS OXYGENES**
ZUSAMMENSETZUNGEN MIT FLUORIERTEN KOHLENWASSERSTOFFEN UND OXYGENIERTEN LÖSUNGSMITTELN
COMPOSITIONS CONTAINING FLUORINATED HYDROCARBONS AND OXYGENATED SOLVENTS

(30) Priorité: 17.01.2003 FR 0300529
(43) Date de publication de la demande: 12.10.2005
(73) Titulaire: Arkema, 92800 Puteaux (FR)
(72) Inventeur: ARTUPHEL, Benoît, F-75012 Paris (FR); LALLIER, Jean-Pierre, F-69720 Saint Bonnet de Mure (FR); RASTELLETTI, Emmanuel, F-69200 Venissieux (FR)
(74) Mandataire: Dang, Doris
(86) Numéro de dépôt international: PCT/FR2004/000049
(87) Numéro de publication internationale: WO 2004/072218

(56) Documents cités:
- WO-A-00/17301
- DE-A- 3 325 166
- FR-A- 2 792 649
- FR-A- 2 800 746
- US-A- 5 690 750
- US-A1- 2001 034 313
- US-A1- 2002 068 685
- US-B1- 6 482 270

## Description

La présente invention concerne le domaine des hydrocarbures fluorés et a plus particulièrement pour objet de nouvelles compositions contenant des hydrocarbures fluorés et des solvants oxygénés. Ces nouvelles compositions sont utilisables notamment dans toutes les applications solvants du HCFC 141b (hydrochlorofluorocarbure 141b), en particulier dans diverses opérations de traitement de surfaces solides telles que le nettoyage, le dégraissage, le défluxage ou le séchage de surfaces solides.

Le 1,1-dichloro-1-fluoroéthane (connu sous la désignation HCFC 141b) est largement utilisé dans l'industrie pour le nettoyage et le dégraissage de surfaces solides très diverses (pièces métalliques, verres, plastiques, composites), pour lesquelles une absence, ou du moins une teneur résiduelle aussi faible que possible, en impuretés, notamment de nature organique, est exigée. On peut mentionner ses utilisations pour le dégraissage de pièces métalliques lourdes et pour le nettoyage de pièces mécaniques de haute qualité et de grande précision dans les industries les plus diverses telles que l'aéronautique, l'aérospatiale, l'électronique, la mécanique, l'orfèvrerie, la coutellerie, l'horlogerie, les prothèses médicales. On peut mentionner également son utilisation dans le domaine de la fabrication des circuits imprimés pour éliminer les résidus des substances utilisées pour améliorer la qualité des soudures (désignées par le terme de flux de soudures), cette opération d'élimination étant désignée par le terme défluxage.

Outre sa stabilité thermique et chimique, sa non inflammabilité, sa faible toxicité et son bas point d'ébullition (préservant les pièces thermiquement fragiles), le HCFC 141b s'avère particulièrement performant dans ces applications en raison de sa faible tension superficielle (18,4 mN/m) et de son pouvoir solvant relativement élevé (Indice Kauri-butanol I.K.B. = 51). Ces deux dernières propriétés chimiques lui permettent d'avoir une bonne aptitude à la dissolution de salissures grasses et tout particulièrement celles présentes sur des pièces complexes comportant des trous, des creux ou des cannelures tels que l'on peut en trouver dans les domaines de la mécanique de précision, de l'horlogerie ou de la coutellerie par exemple.

Cependant, en raison de son action sur la couche d'ozone qui n'est pas nulle (Potentiel de dégradation de l'ozone ODP = 0,11), le HCFC 141b est soumis à une réglementation importante qui vise de plus en plus à le supprimer. Ainsi, la réglementation européenne sur les substances nuisibles à la couche d'ozone (n°2037/2000) interdit l'utilisation des HCFC tels que le HCFC 141b dans les applications solvants depuis le 1^{er} janvier 2002, sauf pour les domaines de l'aéronautique et de l'aérospatiale où l'interdiction prend effet à partir de 2008 sur le territoire européen.

Des solutions de substitution visant à remplacer le HCFC 141b dans les applications précitées ont été proposées, notamment l'utilisation de HFC (hydrofluorocarbures) et/ou de HFE (hydrofluoroéthers). Les HFC et les HFE n'ont pas d'action sur la couche d'ozone (ODP nul ou négligeable vis à vis de la réglementation en vigueur).

Parmi les HFC les plus connus et utilisés, on peut citer par exemple le 1,1,1,3,3-pentafluorobutane (365 mfc), le 1,1,1,2,3,4,4,5,5,5-décafluoropentane (4310 mee), le 1,1,1,2-tétrafluoroéthane (134a), le pentafluoroéthane (125), le 1,1,1-trifluoroéthane (143a), le difluorométhane (32), le 1,1-difluoroéthane (152a), le 1-fluoroéthane (161), le 1,1,1,2,3,3,3, heptafluoropropane (227ea), le 1,1,1,3,3-pentafluoropropane (245fa), l'octafluoropropane (218), le (perfluorobutyl)-éthylène (C₄H₉CH=CH₂), le 1,1,2,2,3,4,5-heptafluorocyclopentane (C₅H₃F₇), le perfluorohexyléthylène (C₆F₁₃CHCH₂), le tridécafluorohexane (C₆F₁₃H), la perfluoro(méthylmorpholine) (PF 5052), ainsi que leurs mélanges pouvant contribuer à l'amélioration de certaines propriétés telles que l'ininflammabilité par exemple.

Parmi les HFE les plus connus et utilisés, on peut citer par exemple le méthylheptafluoropropyl éther (C₃F₇OCH₃), le méthylnonafluorobutyl éther (C₄F₉OCH₃), l'éthylnonafluorobutyl éther (C₄F₉OC₂H₅), le perfluoropyranne (C₅F₁₀O) ainsi que leurs mélanges.

Les HFC et les HFE présentent des propriétés physico-chimiques comparables à celles du HCFC 141b : bonne stabilité thermique et chimique, faible toxicité, bas point d'ébullition, faible tension superficielle. Cependant, leur pouvoir solvant n'atteint pas celui du HCFC 141b. Les indices Kauri-butanol (LK.B.) sont respectivement 9 et 10 pour le HFC 4310 mee et le HFE C₄F₉OCH₃, comparativement à 51 pour le HCFC 141b. Il en résulte une efficacité de ces composés pour les applications de traitement de surfaces solides nettement inférieure à celle du HCFC 141b.

WO 00/17 301 A1 décrit une composition comprenant un solvant trans-1,2-dichloréthylène et au moins un solvant choisi entre les alcools, les cétones, les hydroflucrocarbures et les hydrofluoroéthers. US 2001/034 313 A1 décrit une composition comprenant du diacétone alcool et du diméthylsulfoxyde.

De manière inattendue, il a été trouvé qu'en ajoutant du 4-hydroxy-4-methyl-2-pentanone, appelé aussi diacétone alcool (que l'on notera par la suite DAA) avec du diméthylsulfoxyde (que l'on notera par la suite DMSO) et/ou du butanol secondaire à une base fluorée constituée d'un mélange de un ou plusieurs composés halogénés ayant une tension de surface inférieure à 30 mN/m (selon la norme ISO 304-1985) et une action sur la couche d'ozone négligeable (ODP nul ou négligeable), on obtient de nouvelles compositions présentant des performances applicatives équivalentes à celles du HCFC 141b. De plus, ces compositions sont dépourvues d'effet destructeur de la couche d'ozone. Elles constituent donc une alternative tout à fait satisfaisante au HCFC 141b dans les domaines d'utilisation de ce solvant.

La présente invention a donc pour objet des compositions comprenant une base fluorée, du diacétone alcool (DAA), du DMSO et/ou du butanol secondaire.

Sauf indication contraire, les pourcentages utilisés dans le présent texte pour indiquer la teneur des compositions selon l'invention sont des pourcentages en poids.

Les compositions selon l'invention comprennent avantageusement de 1 à 88% de base fluorée, de 5 à 94% de DAA, de 5 à 70% de DMSO et/ou de butanol secondaire. La teneur en DMSO ou en butanol secondaire est avantageusement au plus égale à la teneur en DAA. De préférence, les compositions de l'invention comprennent de 5 à 80% de base fluorée, de 15 à 85 % de DAA et de 5 à 50% de DMSO et/ou de butanol secondaire.

On entend par base fluorée utilisable dans les compositions selon l'invention un mélange de un ou plusieurs composés halogénés ayant une tension de surface inférieure à 30 mN/m et une action sur la couche d'ozone négligeable (ODP nul ou négligeable). Le ou les composé(s) halogénés peuvent être choisis parmi les hydrofluorocarbures (HFC) et/ou les hydrofluoroéthers (HFE).

Comme exemples non limitatifs de HFC , on peut citer le 1,1,1,3,3-pentafluorobutane (365 mfc), le 1,1,1,2,3,4,4,5,5,5-décafluoropentane (4310 mee), le 1,1,1,2-tétrafluoroéthane (134a), le pentafluoroéthane (125), le 1,1,1-trifluoroéthane (143a), le difluorométhane (32), le 1,1-difluoroéthane (152a), le 1-fluoroéthane (161), le 1,1,1,2,3,3,3, heptafluoropropane (227ea), le 1,1,1,3,3-pentafluoropropane (245fa), l'octafluoropropane (218), le (perfluorobutyl)-éthylène (C₄H₉CH=CH₂), le 1,1,2,2,3,4,5-heptafluorocyclopentane (C₅H₃F₇), le perfluorohexyléthylène (C₆F₁₃CHCH₂), le tridécafluorohexane (C₆F₁₃H), la perfluoro(méthylmorpholine) (PF 5052).

Comme exemples non limitatifs de HFE, on peut citer le méthylheptafluoropropyl éther (C₃F₇OCH₃), le méthylnonafluorobutyl éther (C4F9OCH3), l'éthylnonafluorobutyl éther (C₄F₉OC₂H₅), le perfluoropyranne (C₅F₁₀O).

La plupart de ces composés sont disponibles sur le marché.

Parmi les bases fluorées utilisables dans les compositions selon l'invention, on peut citer par exemple les mélanges binaires ou ternaires HFC 365 mfc / HFC 4310 mee, HFC 365 mfc / HFC 4310 mee / HFC 227ea, HFC 227ea / HFE.

De préférence, on utilise comme base fluorée des mélanges de HFC 365 mfc et de HFC 4310 mee. Avantageusement, ces mélanges comprennent de 5 à 95% de HFC 365 mfc et de 5 à 95% de HFC 4310 mee. Ces mélanges peuvent contenir éventuellement du HFC 227 ea. Un mélange préféré est constitué de 80% de HFC 365 mfc et 20% de HFC 4310 mee. Un autre mélange préféré est constitué de 50% de HFC 365mfc et de 50% de HFC 4310mee.

La base fluorée peut contenir en outre du trans-1,2-dichloréthylène dont le point d'ébullition est de 47,8°C.

Une composition selon l'invention particulièrement intéressante est constituée de 50% de base fluorée, de 40% de DAA et 10% de DMSO. Une autre composition intéressante est constituée de 30% de base fluorée, 23,33% de DAA, 23,33% de butanol secondaire et 23,33% de DMSO.

Les compositions selon l'invention peuvent être facilement préparées par simple mélange des constituants.

Les compositions selon l'invention peuvent notamment être utilisées dans les mêmes applications et être mises en oeuvre selon les mêmes modalités que les compositions antérieures à base de HCFC 141b. Elles conviennent donc particulièrement à l'utilisation pour le traitement de surfaces solides tel que le nettoyage, le dégraissage, le séchage de surfaces solides, le défluxage de circuits imprimés. Pour ces applications, sont généralement employés outre le HCFC 141 b, d'une part des solvants plus lourds tels que des coupes pétrolières ou des mélanges de solvants à base d'éthers de glycol lourds ou des mélanges de solvants exempts de base fluorée, et, d'autre part, des lessives aqueuses contenant des tensioactifs. Par rapport à ces autres solutions, les compositions de l'invention présentent de nombreux avantages parmi lesquels une viscosité plus faible et par conséquent une fluidité permettant une mise en oeuvre plus aisée (notamment par rapport aux éthers de glycol lourds), un rinçage beaucoup plus aisé (notamment par rapport aux coupes pétrolières qui ont tendance à laisser un film gras. Les lessives aqueuses nécessitent un système indépendant de rinçage et de séchage par un solvant et sont génératrices d'effluents difficiles à éliminer. Toutes ces autres solutions ne peuvent être généralement utilisées dans les mêmes machines que celles fonctionnant au HCFC 141b. Les compositions de l'invention sont tout à fait utilisables dans les machines fonctionnant au HCFC 141b et elles s'avèrent être supérieures au niveau performance à ces autres solutions et beaucoup plus polyvalentes.

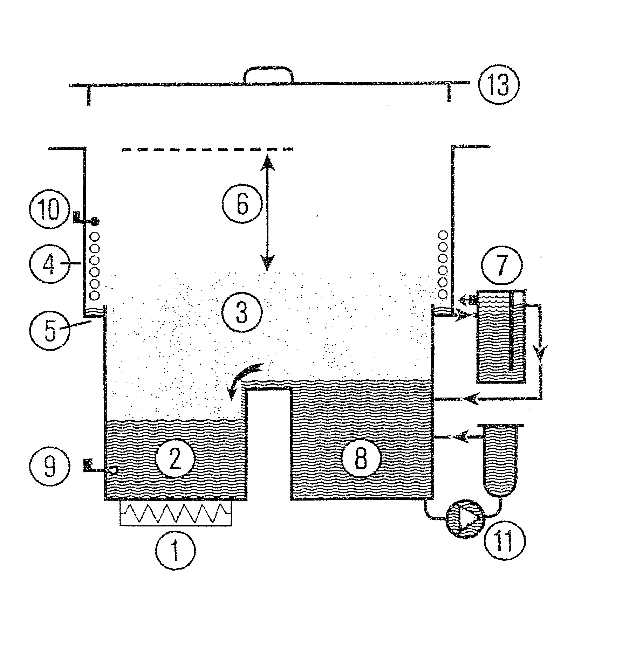

Une machine et un schéma de fonctionnement, illustrant un mode de mise en oeuvre connu pour le traitement des surfaces solides, représentés à la figure unique, sont décrits ci-après.

La machine comprend deux cuves, une cuve de nettoyage (2) et une cuve de rinçage (8), et un couvercle (13). Les cuves (2) et (8) sont de préférence hautes et étroites de façon à bien piéger les vapeurs de solvant. Elles peuvent être munies de systèmes à ultrasons qui sont utilisés lorsque les pièces à nettoyer ne sont pas trop fragiles.

Au démarrage, la cuve de nettoyage (2) contenant une composition de nettoyage selon l'invention est portée à la température d'ébullition de la base fluorée présente dans la composition à l'aide de la résistance chauffante (1). Les températures d'ébullition du DAA (168°C), du DMSO (189°C) et du butanol secondaire (99,5°C) étant nettement plus élevées que la température d'ébullition de la base fluorée (généralement inférieure à 55°C), le mélange de ces solvants demeure dans la phase liquide du bain de nettoyage (2), sans subir d'évaporation notable.

La cuve de rinçage (8) est remplie de base fluorée seule.

Les vapeurs (3) de base fluorée issues de l'ébullition de la cuve (2) sont recyclées dans la cuve de rinçage (8) par l'intermédiaire d'un serpentin de refroidissement 4 et récupération dans une rigole (5). Les sondes de température (9) et (10) permettent de contrôler les températures des phases liquide et vapeur. Le séparateur (7) a pour rôle de séparer l'eau provenant de la condensation de la vapeur d'eau de l'atmosphère La cuve de nettoyage (2) est alimentée en base fluorée recyclée relativement propre par système de trop plein à débordement à partir de la cuve (8), le poucentage de salissure étant de 10% au maximum par rapport à la cuve de nettoyage. La pompe (11) permet une filtration du solvant pour retenir en particulier les particules solides. De manière analogue à l'utilisation du HCFC 141b, le bain de nettoyage pourra être changé lorsque ce dernier contient environ 30% de salissure.

L'utilisation de cette machine consiste à immerger dans un premier temps la pièce à nettoyer dans la cuve de nettoyage (2).

La surface à traiter peut être métallique, en verre minéral, en céramique ou encore en polymère organique.

La surface à nettoyer peut être recouverte de différents corps gras d'origine animale, végétale, minérale ou encore de synthèse, tels que par exemple l'huile de vaseline, les huiles hydrosolubles ou les huiles entières. Elle peut être recouverte de flux de soudure.

Sans que la demanderesse soit tenue d'explication, elle pense que le DMSO et/ou le butanol secondaire dans le bain de nettoyage favorise la transformation en gouttelettes de l'huile présente sur la surface. Le DAA réalise le décollement des gouttelettes et joue le rôle de détergent. Il a été trouvé que le butanol secondaire a un effet particulièrement bénéfique pour l'élimination des flux de soudure. Il constitue avec le DAA un très bon additif à la base fluorée pour cette application. Lorsque les flux sont très difficiles à éliminer, l'incorporation de DMSO permet encore d'augmenter la polarité et d'atteindre une très bonne efficacité.

La pièce nettoyée est ensuite immergée dans le bain de rinçage (8). Par effet d'entraînement sur la surface des pièces, le bain de rinçage (8) constitué de base fluorée pure peut être pollué de manière progressive par les corps gras. Un second bain de rinçage peut être utilisé en cas de forts entraînements. Un rinçage complémentaire dans la zone (3) comprenant la base fluorée en phase vapeur peut également être effectué avant séchage dans la zone froide (6) de la machine.

Un autre objet de l'invention est donc un procédé de traitement de surfaces solides effectué dans une machine comprenant une cuve de nettoyage (2) et une cuve de rinçage (8), caractérisé en ce que la cuve de nettoyage (2) est remplie avec une composition selon l'invention et la cuve de rinçage (8) est remplie avec une base fluorée pure, cette base fluorée étant identique ou différente de celle présente dans la cuve de nettoyage (2).

Selon une variante préférée du procédé selon l'invention, la base fluorée présente dans la cuve de rinçage est identique à celle présente dans la cuve de nettoyage. Cette manière de procéder permet d'obtenir des pièces propres, exemptes d'huile résiduelle ou de flux de soudure, et sèches, exemptes de traces de solvant. Dans les cas difficiles de nettoyage, il sera préférable d'utiliser une composition de nettoyage comportant une forte teneur en base fluorée, au minimum 30% de base fluorée ; la composition de nettoyage contenant déjà la formule de rinçage, l'opération de rinçage sera ainsi facilitée. On ne sortirait pas du domaine de l'invention si le (ou les) bain(s) de rinçage contient (contiennent) une base fluorée autre que celle présente dans le bain de nettoyage.

Les compositions de l'invention peuvent en outre être utilisées dans d'autres applications, notamment celles du HCFC 141b, par exemple pour le nettoyage à sec des textiles, pour le nettoyage d'installations frigorifiques, comme agents d'expansion des mousses polyuréthane, comme agents propulseurs d'aérosols, fluides caloporteurs ou agents de dépôt des silicones.

Les exemples ci-après sont donnés à titre purement illustratifs de l'invention et ne doivent nullement être interprétés comme une limitation de celle-ci. Les pourcentages utilisés dans les exemples pour indiquer la teneur des compositions sont des pourcentages en poids.

### EXEMPLE 1

Pour évaluer l'efficacité en dégraissage de différentes compositions de l'invention, on utilise des plaques d'acier inoxydable, de surface 8 cm². Chaque plaque est enduite d'huile en étalant une grosse goutte d'huile sur une des surfaces. La plaque est trempée pendant 5 minutes à température ambiante dans un bécher contenant 50 ml de composition à tester. Ensuite, la plaque est retirée du bécher, égouttée et immergée pendant 2 minutes à température ambiante dans un second bécher contenant 50 ml de base fluorée pure. Aucune agitation n'est utilisée pendant ces 2 phases. La plaque est ensuite séchée à température ambiante pendant quelques secondes jusqu'à évaporation de la base fluorée. L'efficacité du dégraissage est déterminée par évaluation visuelle de la proportion de surface de la plaque exempte d'huile. La notation adoptée peut être résumée dans le tableau 1.

**TABLEAU 1**

| Observation sur la plaque | Pouvoir de dégraissage |
|---|---|
| > 90% | Très bon |
| > 70% | Bon |
| < 70% | Moyen |

Trois types d'huile ont été utilisés pour effectuer les tests :
- Huile de vaseline cosmétique
- Huile SHRADER hydrosoluble
- Huile MOBIL CUTREX 734
Les résultats obtenus avec les différentes compositions testées figurent dans le tableau 2.

**TABLEAU 2**

| Référence de la composition | COMPOSITION en % poids | | | | Pouvoir de dégraissage | | |
|---|---|---|---|---|---|---|---|
| | DAA | DMSO | Base fluorée | | | | |
| | | | HFC 365 mfc | HFC 4310mee | Huile de vaseline | Huile SHRADER | Huile CUTREX 734 |
| L1 | 40 | 10 | 40 | 10 | Bon | Bon | Très bon |
| L2 | 5 | 45 | 40 | 10 | Très bon | Bon | Moyen |
| L3 | 20 | 5 | 60 | 15 | Bon | Bon | Très bon |
| L4 | 85 | 5 | 5 | 5 | Très bon | Bon | Très bon |
| L5 | 10 | 5 | 65 | 20 | Bon | Bon | Moyen |

Les formulations selon l'invention permettent d'obtenir des plaques dont la majeure partie de surface est exempte d'huile ; elles ont de bonnes propriétés dégraissantes vis à vis des trois huiles testées.

### EXEMPLE 2

Pour cet exemple, on utilise la machine de dégraissage en référence à la figure unique.

La cuve de nettoyage (2) est remplie de 5 litres de composition de dégraissage référencée L1 dans l'exemple 1. Le bain de nettoyage est porté à la température d'ébullition de la base fluorée, soit 40°C.
La cuve de rinçage (8) est remplie de 5 litres de la même base fluorée pure composée de 80% de HFC 365 mfc et 20% de HFC 4310 mee. La température de la cuve de rinçage (8) est de 40°C.
Une pièce en métal léger, traitée d'une dorure, d'origine aérospatiale, de forme parallélépipédique, dont les dimensions sont d'environ 10x15x3 cm et contenant des trous, des cannelures enduite d'une huile entière dont la dénomination est Variotcut D734 de chez CASTROL (environ 1g) a été immergée dans la cuve de nettoyage (2) pendant 3 minutes, puis dans la cuve de rinçage (8) pendant une minute. Un deuxième rinçage a été effectué dans la phase vapeur (3) pendant 10 secondes et le séchage a été réalisé dans la zone froide de la machine (6) pendant 10 secondes.
La pièce a été parfaitement dégraissée dans ces conditions.

### EXEMPLE 3 comparatif

On utilise les mêmes conditions opératoires que celles de l'exemple 2, mais la cuve de nettoyage (2) est remplie de base fluorée pure composée de 80% de HFC 365 mfc et 20% de HFC 4310 mee, comme la cuve de rinçage (8).
La pièce après nettoyage, rinçage et séchage comporte des traces résiduelles d'huile.

### EXEMPLE 4

On reproduit l'exemple 2 en changeant la nature de la composition de dégraissage dans la cuve de nettoyage (2) (Tableau 3). La cuve de rinçage (8) est remplie de base fluorée pure composée de 80% de HFC 365 mfc et 20% de HFC 4310 mee.

**TABLEAU 3**

| Composition | Base fluorée | | | | |
|---|---|---|---|---|---|
| | HFC 365 mfc | HFC 4310 mee | DAA | DMSO | Butanol secondaire |
| M1 | 2 | 28 | 55 | 15 | |
| M2 | 8 | 12 | 26,67 | 26,67 | 26,67 |
| M3 | 4 | 4 | 25 | 25 | 25 |

Toutes ces compositions ont conduit à d'excellents résultats de dégraissage.

### EXEMPLE 5

Pour évaluer l'efficacité en défluxage de 2 compositions de l'invention, on utilise une machine de nettoyage en référence à la figure unique, (machine pourvue d'ultrasons Ultrason Annemasse) et d'un séparateur (7) rempli de siliporite. Les cuves (2) et (8) ont une contenance de 20 litres.
La cuve de nettoyage (2) est remplie de composition de défluxage et la température est portée à la température d'ébullition, soit 67°C.
La cuve de rinçage (8) est remplie de base fluorée seule. La température de la cuve de rinçage est la température d'ébullition de la base fluorée, soit 40°C.
Les pièces à nettoyer (cartes électroniques) sont immergées dans le bain de nettoyage pendant environ 3 à 5 minutes, puis dans le bain de rinçage pendant 2 minutes. Le séchage est ensuite réalisé directement dans la zone froide (6) de la machine.
Les compositions M4 et M6 (tableau 4) ont été testées.

**TABLEAU 4**

| Composition | BASE fluorée | | | | |
|---|---|---|---|---|---|
| | HFC 365 mfc | HFC 4310 mee | DAA | DMSO | Butanol secondaire |
| M4 | 8 | 32 | 25 | | 35 |
| M5 | 4 | 26 | 23,33 | 23,33 | 23,33 |

La composition M4 a donné d'excellents résultats de défluxage pour des cartes électroniques avec colophane synthétique. La composition M5 a permis d'éliminer les flux de soudures difficiles appelés no clean.

## Revendications

1. Composition comprenant une base fluorée, du diacétone alcool (DAA), du DMSO et/ou du butanol secondaire.

2. Composition selon la revendication 1, comprenant de 1 à 88% en poids de base fluorée, de 5 à 94% en poids de DAA et de 5 à 70% en poids de DMSO et /ou de butanol secondaire.

3. Composition selon la revendication 1 ou 2, comprenant de préférence de 5 à 80% de base fluorée, de 15 à 85% de DAA et de 5 à 50% de DMSO et/ou de butanol secondaire.

4. Composition selon l'une des revendications 1 à 3, **caractérisée en ce que** la base fluorée comprend un ou plusieurs composés halogénés ayant une tension de surface inférieure à 30 mN/m et un potentiel de dégradation de l'ozone (ODP) nul.

5. Composition selon la revendication 4, **caractérisée en ce que** le ou les composé(s) halogénés sont choisis parmi les hydrofluorocarbures (HFC) et/ou les hydrofluoroéthers (HFE).

6. Composition selon l'une des revendications 1 à 5, **caractérisée en ce que** la base fluorée contient en outre du trans-1,2-dichloréthylène.

7. Composition selon la revendication 5, **caractérisée en ce que** le ou les HFC sont choisis parmi le 1,1,1,3,3-pentafluorobutane (HFC 365 mfc), le 1,1,1,2,3,4,4,5,5,5-décafluoropentane (HFC 4310 mee), le 1,1,1,2-tétrafluoroéthane (HFC 134a), le pentafluoroéthane (HFC 125), le 1,1,1-trifluoroéthane (HFC 143a), le difluorométhane (HFC 32), le 1,1-difluoroéthane (HFC 152a), le 1-fluoroéthane (HFC 161), le 1,1,1,2,3,3,3, heptafluoropropane (HFC 227ea), le 1,1,1,3,3-pentafluoropropane (HFC 245fa), l'octafluoropropane (HFC 218), le (perfluorobutyl)-éthylène (C₄H₉CH=CH₂), le 1,1,2,2,3,4,5-heptafluorocyclopentane (C₅H₃F₇), le perfluorohexyléthylène (C₆F₁₃CHCH₂), le tridécafluorohexane (C₆F₁₃H), la perfluoro(méthylmorpholine) (PF 5052).

8. Composition selon l'une des revendications 5 à 7, **caractérisée en ce que** la base fluorée comprend un mélange de HFC 365 mfc et de HFC 4310 mee et éventuellement du HFC 227 ea.

9. Composition selon la revendication 5, **caractérisée en ce que** le ou les HFE sont choisis parmi le méthylheptafluoropropyl éther (C₃F₇OCH₃), le méthylnonafluorobutyl éther (C4F9OCH3), l'éthylnonafluorobutyl éther (C₄F₉OC₂H₅), le perfluoropyranne (C₅F₁₀O).

10. Utilisation des compositions selon l'une des revendications 1 à 9 pour le traitement de surfaces solides tel que le nettoyage, le dégraissage, le séchage de surfaces solides, le défluxage de circuits imprimés.

11. Utilisation des compositions selon l'une des revendications 1 à 9 pour le nettoyage à sec des textiles.

12. Utilisation des compositions selon l'une des revendications 1 à 9 pour le nettoyage d'installations frigorifiques.

13. Utilisation des compositions selon l'une des revendications 1 à 9 comme agents d'expansion des mousses polyuréthanne.

14. Utilisation des compositions selon l'une des revendications 1 à 9 comme agents propulseurs d'aérosols.

15. Utilisation des compositions selon l'une des revendications 1 à 9 comme fluides caloporteurs.

16. Utilisation des compositions selon l'une des revendications 1 à 9 comme agents de dépôt des silicones.

17. Procédé de traitement de surfaces solides effectué dans une machine comprenant une cuve de nettoyage (2) et une cuve de rinçage (8), **caractérisé en ce que** la cuve de nettoyage (2) est remplie avec une composition selon l'une des revendications 1 à 9 et la cuve de rinçage (8) est remplie avec une base fluorée pure, cette base fluorée pouvant être différente de celle présente dans la cuve de nettoyage (2).

## Claims

1. Composition comprising a fluorinated base, diacetone alcohol (DAA), and DMSO and/or secondary butanol.

2. Composition according to Claim 1, comprising from 1 to 88% by weight of fluorinated base from 5 to 94% by weight of DAA, and from 5 to 70% by weight of DMSO and/or of secondary butanol.

3. Composition according to Claim 1 or 2, preferably comprising from 5 to 80% of fluorinated base, from 15 to 85% of DAA and from 5 to 50% of DMSO and/or of secondary butanol.

4. Composition according to one of Claims 1 to 3, **characterized in that** the fluorinated base comprises one or more halogenated compounds having a surface tension of less than 30 mN/m and a zero ozone degrada tien potential (ODP).

5. Composition according to Claim 4, **characterized in that** the halogenated compound(s) is (are) chosen, from hydrofluorocarbons (HFCs) and/or hydrofluoro ethers (HFEs).

6. Composition according to one of Claims 1 to 5, **characterized in that** the fluorinated base also contains trans-1,2-dichloroethylene.

7. Composition according to Claim 5, **characterized in that** the HFC(s) is (are) chosen from 1,1,1,3,3-pentafluorobutane (HFC 365 mfc), 1,1,1,2,3,4,4,5,5,5-decafluoropentane (HFC 4310 mee), 1,1,1,2-tetrafluoroethane (HFC 134 a), pentafluoroethane (HFC 125), 1,1,1-trifluoroethane (HFC 143 a), difluoromethane (HFC 32), 1,1-difluoroethane (HFC 152 a), 1-fluoroethane (HFC 161), 1,1,1,2,3,3,3-heptafluoropropane (HFC 227 ea), 1,1,1,3,3,pentafluoropropane (HFC 245 fa), octafluoropropane (HFC 218), (perfluorobutyl)ethylene (C₄H₂CH=CH₂), 1, 1, 2, 2, 3, 4, 5-heptafluorocyclopentane (C₅H₃F₇), perfluorohexylethylene (C₆F₁₃CHCH₂), tridecafluoronexane (C₆F₁₃H) and perfluoro(methylmorpholine) (PF 5052).

8. Composition according to one of Claims 5 to 7, **characterized in that** the fluorinated base comprises a mixture of HFC 365 mfc and HFC 4310 mee and, optionally, HFC 227 ea,

9. Composition according to Claim 5, **characterized in that** the HFE(s) is (are) chosen from methylheptafluoropropyl ether (C₃F₇OCH₃), methylnonafluorobutyl ether (C₄F₉OCH₃), ethylnonafluorobutyl ether (C₄F₉OC₂H₅) and perfluoropyran (C₅F₁₀O).

10. Use of the compositions according to one of claims 1 to 9, for the treatment of solid surfaces, such as the cleaning, degreasing or drying of solid surfaces, or the defluxing of printed circuits.

11. Use of the compositions according to one of Claims 1 to 9, for the dry cleaning of textiles.

12. Use of the compositions according to Claims 1 to 9, for the cleaning of refrigeration plants.

13. Use of the compositions according to one of Claims 1 to 9, as agents, for expanding polyurethane foams.

14. Use of the compositions according to one of Claims 1 to 9, as aerosol propellants.

15. Use of the compositions according to one of Claims 1 to 9, as heat-transfer fluids.

16. Use of the compositions according to one of Claims 1 to 9, as silicone-depositing agents.

17. Method for treating solid surfaces, performed in a machine comprising a cleaning tank (2) and a rinsing tank (8), **characterized in that** the cleaning tank (2) is filled with a composition according to one of Claims 1 to 9 and the rinsing tank (8) is filled with a pure fluorinated base, this fluorinated base possibly being different from that present in the cleaning tank (2).

## Patentansprüche

1. Zusammensetzung, enthaltend eine fluorierte Grundlage, Diacetonalkohol (DAA) und DMSO und/oder sec-Butanol.

2. Zusammensetzung nach Anspruch 1, enthaltend 1 bis 88 Gew.-% fluorierte Grundlage, 5 bis 94 Gew.-% DAA und 5 bis 70 Gew.-% DMSO und/oder sec-Butanol.

3. Zusammensetzung nach Anspruch 1 oder 2, vorzugsweise enthaltend 5 bis 80 Gew.-% fluorierte Grundlage, 15 bis 85 Gew.-% DAA und 5 bis 50 Gew.-% DMSO und/oder sec-Butanol.

4. Zusammensetzung nach einem der Ansprüche 1 bis 3, **dadurch gekennzeichnet, daß** die fluorierte Grundlage eine oder mehrere halogenierte Verbindungen mit einer Oberflächenspannung von weniger als 30 mN/m und keinem Ozonschädigungspotential (ODP) umfaßt.

5. Zusammensetzung nach Anspruch 4, **dadurch gekennzeichnet, daß** die halogenierte Verbindung bzw. die halogenierten Verbindungen unter teilfluorierten Kohlenwasserstoffen (H-FKWs) und/oder teilfluorierte Ether (HFEs) ausgewählt ist bzw. sind.

6. Zusammensetzung nach einem der Ansprüche 1 bis 5, **dadurch gekennzeichnet, daß** die fluorierte Grundlage außerdem trans-1,2-Dichlorethylen enthält.

7. Zusammensetzung nach Anspruch 5, **dadurch gekennzeichnet, daß** der H-FKW bzw. die H-FKWs unter 1,1,1,3,3-Pentafluorbutan (H-FKW 365mfc), 1,1,1,2,3,4,4,5,5,5-Decafluorpentan (H-FKW 4310mee), 1,1,1,2-Tetrafluorethan (H-FKW 134a), Pentafluorethan (H-FKW 125), 1,1,1-Trifluorethan (H-FKW 143a), Difluormethan (H-FKW 32), 1,1-Difluorethan (H-FKW 152a), 1-Fluorethan (H-FKW 161), 1,1,1,2,3,3,3-Heptafluorpropan (H-FKW 227ea), 1,1,1,3,3-Pentafluorpropan (H-FKW 245fa), Octafluorpropan (H-FKW 218), (Perfluorbutyl)-ethylen (C₄H₉CH=CH₂), 1,1,2,2,3,4,5-Heptafluorcyclopentan (C₅H₃F₇), Perfluorhexylethylen (C₆F₁₃CHCH₂), Tridecafluorhexan (C₆F₁₃H) und Perfluor(methylmorpholin) (PF 5052) ausgewählt ist bzw. sind.

8. Zusammensetzung nach einem der Ansprüche 5 bis 7, **dadurch gekennzeichnet, daß** die fluorierte Grundlage eine Mischung von H-FKW 365mfc und H-FKW 4310mee und gegebenenfalls H-FKW 227ea umfaßt.

9. Zusammensetzung nach Anspruch 5, **dadurch gekennzeichnet, daß** der HFE bzw. die HFEs unter Methylheptafluorpropylether (C₃F₇OCH₃), Methylnonafluorbutylether (C₄F₉OCH₃), Ethylnonafluorbutylether (C₄F₉OC₂H₅) und Perfluorpyran (C₅F₁₀O) ausgewählt ist bzw. sind.

10. Verwendung der Zusammensetzungen nach einem der Ansprüche 1 bis 9 zur Behandlung von festen Oberflächen, wie der Reinigung, Entfettung oder Trocknung von festen Oberflächen, oder der Entfernung von Flußmittelresten von Leiterplatten.

11. Verwendung der Zusammensetzungen nach einem der Ansprüche 1 bis 9 zur Trockenreinigung von Textilien.

12. Verwendung der Zusammensetzungen nach einem der Ansprüche 1 bis 9 zur Reinigung von Kälteanlagen.

13. Verwendung der Zusammensetzungen nach einem der Ansprüche 1 bis 9 als Treibmittel für Polyurethanschaumstoffe.

14. Verwendung der Zusammensetzungen nach einem der Ansprüche 1 bis 9 als Aerosoltreibmittel.

15. Verwendung der Zusammensetzungen nach einem der Ansprüche 1 bis 9 als Wärmeträgerflüssigkeit.

16. Verwendung der Zusammensetzungen nach einem der Ansprüche 1 bis 9 als Silikonabscheidungsmittel.

17. Verfahren zur Behandlung von festen Oberflächen, das in einer Vorrichtung mit einem Reinigungsbehälter (2) und einem Spülbehälter (8) durchgeführt wird, **dadurch gekennzeichnet, daß** man den Reinigungsbehälter (2) mit einer Zusammensetzung nach einem der Ansprüche 1 bis 9 füllt und den Spülbehälter (8) mit einer reinen fluorierten Grundlage füllt, wobei diese reine fluorierte Grundlage von derjenigen im Reinigungsbehälter (2) verschieden sein kann.
